# EUROPÄISCHE PATENTSCHRIFT

(11) **EP 0 982 203 B1**
(45) Veröffentlichungstag und Bekanntmachung des Hinweises auf die Patenterteilung: **20.12.2006**
(21) Anmeldenummer: 99114752.1
(22) Anmeldetag: 28.07.1999
(51) Int. Cl.: B60R 25/04

(54) **Zündschlosssystem für Kraftfahrzeuge**
Ignition lock system for a vehicle
Système de clé de contact pour véhicules

(30) Priorität: 28.08.1998 DE 19839347
(43) Veröffentlichungstag der Anmeldung: 01.03.2000
(73) Patentinhaber: DaimlerChrysler AG, 70567 Stuttgart (DE)
(72) Erfinder: Burghoff, Heinz-Georg, 73262 Reichenbach (DE); Fitz, Hartmut, 73660 Urbach (DE); Geber, Michael, 72574 Bad Urach (DE)

(56) Entgegenhaltungen:
- EP-A- 0 918 001
- DE-A- 3 306 863
- DE-A- 4 317 116
- DE-A- 4 434 655

## Beschreibung

Die Erfindung betrifft ein Zündschlosssystem für Kraftfahrzeuge gemäß dem Oberbegriff des Patentanspruchs 1.

Solche Zündschlosssysteme umfassen ein elektronisches Zündschloss und wenigstens einen zugehörigen elektronischen Zündschlüssel und werden in Kraftfahrzeugen zur Identifizierung des wenigstens einen zum elektronischen Zündschloss gehörigen elektronischen Zündschlüssel eingesetzt. Bei solchen Zündschlosssystemen erfolgt die Identifizierung des wenigstens einen elektronischen Zündschlüssels über einen Datenaustausch von codierten Betriebssignalen zwischen dem elektronischen Zündschloss und dem wenigstens einen elektronischen Zündschlüssel. Die mechanischen Komponenten und Formen der verwendeten elektronischen Zündschlüssel und Zündschlösser sind dabei standardisiert, d. h. der elektronische Zündschlüssel kann in jedes elektronische Zündschloss des gleichen Typs eingeführt werden, um günstigere Fertigungskosten zu erreichen.

Die DE 44 34 655 A1 offenbart ein elektronisches Zündstartschlosssystem an einem Kraftfahrzeug gemäß dem Oberbegriff des Anspruchs 1. Das Zündstartschlosssystem basiert auf einer drahtlosen Übertragung von codierten Betriebssignalen, wobei die Elektronik zu deren Auswertung im Zündstartschloss integriert angeordnet sein kann. Die Bewegung des Zündschlüssels im Zündstartschloss lässt sich in zwei Stellungen mittels einer elektromagnetischen Sperreinrichtung verriegeln.

Aus der DE 43 17 116 A1 ist eine Diebstahlschutzeinrichtung als Immobilisationseinrichtung an einem Kraftfahrzeug bekannt, welches ein Zündanlassschloss, bestehend aus einem mechanischen Schlossteil und einem damit verbundenen, elektrischen Schlossteil und einem zur Immobilisation des Fahrzeugs in seiner Funktion verriegelbaren Bauteil aufweist.

Die EP 0 918 001 A2 offenbart ein elektronisches Zündschlosssystem, insbesondere für Kraftfahrzeuge, mit einem elektronischen Zündschlüssel und einem elektronischem Zündschloss mit einer Schlüsselaufnahme zur Inbetriebnahme eines zugehörigen Betriebsaggregats, wobei der Zündschlüssel zum Austausch von einem codierten Betriebssignal in die Schlüsselaufnahme eingeführt wird. Bei positiver Auswertung des codierten Betriebssignals erfolgt eine Entriegelung einer Sperreinrichtung.

Die DE 33 06 863 C2 beschreibt ein gattungsgemäßes Zündschloßsystem mit einem elektronischen Zündschlüssel mit Mitnehmerelementen für eine Schließeinrichtung und einem elektronischen Zündschloß mit einer Schlüsselaufnahme für den elektronischen Zündschlüssel, wobei bei in die Schlüsselaufnahme eingeführtem elektronischen Zündschlüssel ein Datenaustausch zwischen dem elektronischen Zündschlüssel und dem elektronischen Zündschloß stattfindet, wobei die Mitnehmerelemente des elektronischen Zündschlüssels mit entsprechenden Mitnehmerelementen der Schlüsselaufnahme für einen formschlüssigen Eingriff korrespondieren, wobei eine zusätzliche Abzugssicherung vorgesehen ist, welche verhindert, daß der elektronische Zündschlüssel in seiner gedrehten Stellung aus der Schlüsselaufnahme herausgezogen werden kann, und wobei die Abzugssicherung erste beim Drehen des Schlüssels mit diesem in Eingriff kommt, beim Einstekken des Schlüssels jedoch unwirksam ist.

Als nachteilig kann bei dieser Lösung angesehen werden, daß keine Maßnahmen vorgesehen sind, durch die eine Manipulation am elektronischen Zündschloß und/oder am elektronischen Zündschlüssel kenntlich gemacht werden kann.

Aufgabe der Erfindung ist es, ein gattungsgemäßes Zündschloßsystem derart weiterzubilden, daß eine Manipulation am Zündschloßsystem sicher erkannt werden kann.

Diese Aufgabe wird erfindungsgemäß mit den Merkmalen des Anspruchs 1 gelöst. Die übrigen Ansprüche kennzeichnen vorteilhafte Aus- und Weiterbildungen der Erfindung.

Der Hauptgedanke der Erfindung besteht darin, daß mechanische Sperrmittel in einer Schlüsselaufnahme mit einem elektronischen Zündschlüssel bei einer gesperrten Gebrauchsstellung so zusammenwirken, daß der elektronische Zündschlüssel und/oder die Schlüsselaufnahme beim gewaltsamen Überwinden von Sperrwirkungen der mechanischen Sperrmittel irreversibel beschädigt wird.

Bei einer besonders vorteilhaften Ausführung der Erfindung wird die irreversible Beschädigung durch eine Materialabstimmung zwischen den mechanischen Sperrmitteln und dem Gehäuse des elektronischen Zündschlüssels erreicht, wobei die mechanischen Sperrmittel oder Gehäuseteile des elektronischen Zündschlüssels aus einem gegen Beschädigungen widerstandsfähigeren Material hergestellt werden, so können beispielsweise die mechanischen Sperrmittel aus Metall und die Gehäuseteile des elektronischen Zündschlüssels aus Kunststoff hergestellt werden. Durch diese Ausführung der Systemkomponenten wird erreicht, daß bei einem gewaltsamen Herausziehen des elektronischen Zündschlüssels aus der Schlüsselaufnahme in einer gesperrten Gebrauchsstellung und/oder bei einem gewaltsamen Drehen mit einem nicht vorschriftsmäßig eingeführten elektronischen Zündschlüssel aus einer gesperrten Ausgangsstellung deutlich erkennbare Beschädigungen am Schlüsselgehäuse hervorgerufen werden und/oder daß Teile des Schlüsselgehäuses abbrechen, wodurch eine solche Manipulation sicher erkannt werden kann. Damit das Gehäuseteil vorzugsweise an einer bestimmten Stelle bricht, können zusätzlich Sollbruchstellen am Gehäuse des elektronischen Zündschlüssels vorgesehen werden.

Bei einer vorteilhaften Ausführung der Erfindung wird ein Teil des elektronischen Zündschlüssels als Stecker und die Schlüsselaufnahme des elektronischen Zündschlosses als korrespondierende Steckdose ausgeführt, wobei die mechanischen Sperrmittel in der Schlüsselaufnahme als Drehsperre und/oder als Abzugssicherung ausgeführt sind, und wobei die Drehsperre und/oder die Abzugssicherung aus einem gegen Beschädigungen widerstandsfähigeren Material hergestellt sind und wobei der als Stecker ausgeführte Gehäuseteil des elektronischen Zündschlüssels aus einem gegen Beschädigungen weniger widerstandsfähigen Material hergestellt ist. Der Stecker wird in der Ausgangsstellung der Schlüsselaufnahme formschlüssig in die Schlüsselaufnahme eingeführt, wobei die Drehsperre so angeordnet ist, daß in einer Verriegelungsstellung der Drehsperre bei einem nicht vorschriftsmäßig in die Schlüsselaufnahme eingeführten elektronischen Zündschlüssel, insbesondere bei einem nicht vollständig in die Steckdose eingesteckten Stecker, eine Drehbewegung der Schlüsselaufnahme innerhalb des elektronischen Zündschlosses verhindere wird. Wird trotzdem versucht die Sperrwirkung der Drehsperre gewaltsam zu überwinden, so entstehen durch die beschriebene Materialabstimmung irreversible Beschädigungen am Stecker des elektronischen Zündschlüssels. Bei einem vorschriftsmäßig eingeführten elektronischen Zündschlüssel, insbesondere bei einem vollständig in die Steckdose eingesteckten Stecker, wird die Schlüsselaufnahme für eine Bewegung freigegeben. Die Abzugssicherung ist in der Ausgangsstellung der Schlüsselaufnahme in einer Freigabestellung und sperrt den elektronischen Zündschlüssel außerhalb der Ausgangsstellung, beispielsweise in einer Gebrauchsstellung, gegen ein Abziehen aus der Schlüsselaufnahme. Wird trotzdem versucht die Sperrwirkung der Abzugssicherung gewaltsam zu überwinden, so entstehen durch die beschriebene Materialabstimmung irreversible Beschädigungen am Stecker des elektronischen Zündschlüssels. Die irreversiblen Beschädigungen hängen von der Art der Gewalteinwirkung ab und können deutlich erkennbare Kratzspuren und/oder Gewaltbrüche im und/oder am Stecker sein. Die Drehsperre und die Abzugssicherung werden durch ein Zusammenwirken mit der äußeren Form des Steckers freigeben bzw. gesichert. Durch die Kraftwirkung der Sperrmittel auf den elektronischen Zündschlüssel wird der elektronische Zündschlüssel beim Einführen in die Schlüsselaufnahme des elektronischen Zündschlosses nahezu spielfrei geführt und nach dem vorschriftsmäßigen Einführen in der Schlüsselaufnahme gehalten, wobei der elektronische Zündschlüssel dann richtig in die Schlüsselaufnahme eingeführt ist, wenn der als Stecker ausgeführte Teil des elektronischen Zündschlüssels vollständig in die als Steckdose ausgeführte Schlüsselaufnahme eingeführt ist. Nach dem vorschriftsmäßige Einführen des elektronischen Zündschlüssels kann die Schlüsselaufnahme mit dem Zündschlüssel, nach einer erfolgreich durchgeführten Identifizierung des elektronischen Zündschlüssels, aus der Ausgangsstellung der Schlüsselaufnahme in mehrere Gebrauchsstellungen gedreht werden, wobei die Gebrauchsstellungen der Schlüsselaufnahme mit dem eingeführten Zündschlüssel den verschieden Stellungen eines herkömmlichen Zündschlosses entsprechen. In den Gebrauchsstellungen ist der elektronische Zündschlüssel durch die Abzugssicherung vor einem versehentlichen Abziehen aus der Schlüsselaufnahme gesperrt.

Die verschiedenen Stellungen der Schlüsselaufnahme werden mittels zugeordneter Detektoren, welche beispielsweise als Mikroschalter ausgeführt sind, detektiert. Die Ausgangsstellung der Schlüsselaufnahme entspricht dabei der allgemein bekannten Zündschloßstellung "Zündung aus". Eine erste Gebrauchsstellung entspricht der allgemein bekannten Zündschloßstellung "Radio", eine zweite Gebrauchsstellung entspricht der allgemein bekannten Zündschloßstellung "Zündung an" und eine dritte Gebrauchsstellung entspricht der allgemein bekannten Zündschloßstellung "Motorstart", wobei entsprechende Mittel vorgesehen sind, welche die Schlüsselaufnahme mit dem eingeführten elektronischen Zündschlüssel nach einem Motorstart wieder automatisch in die zweite Gebrauchslage zurücksetzen.

Ausführungsbeispiele der Erfindung sind in der Zeichnung dargestellt und werden im folgenden näher beschrieben.

Es zeigen:
- Fig. 1: Prinzipdarstellung eines Zündschloßsystems mit einem vor dem elektronischen Zündschloß positionierten elektronischen Zündschlüssel,
- Fig. 2: Darstellung eines Zündschloßsystems mit einem vorschriftsmäßig in das elektronische Zündschloß eingeführten elektronischen Zündschlüssel,
- Fig. 3: Darstellung eines Querschnittes entlang der Schnittlinie III gemäß Fig. 1 durch ein elektronisches Zündschloß,
- Fig. 4: Darstellung eines Querschnittes entlang der Schnittlinie IV gemäß Fig. 2 durch ein elektronisches Zündschloß mit einem vorschriftsmäßig eingeführten elektronischen Zündschlüssel,

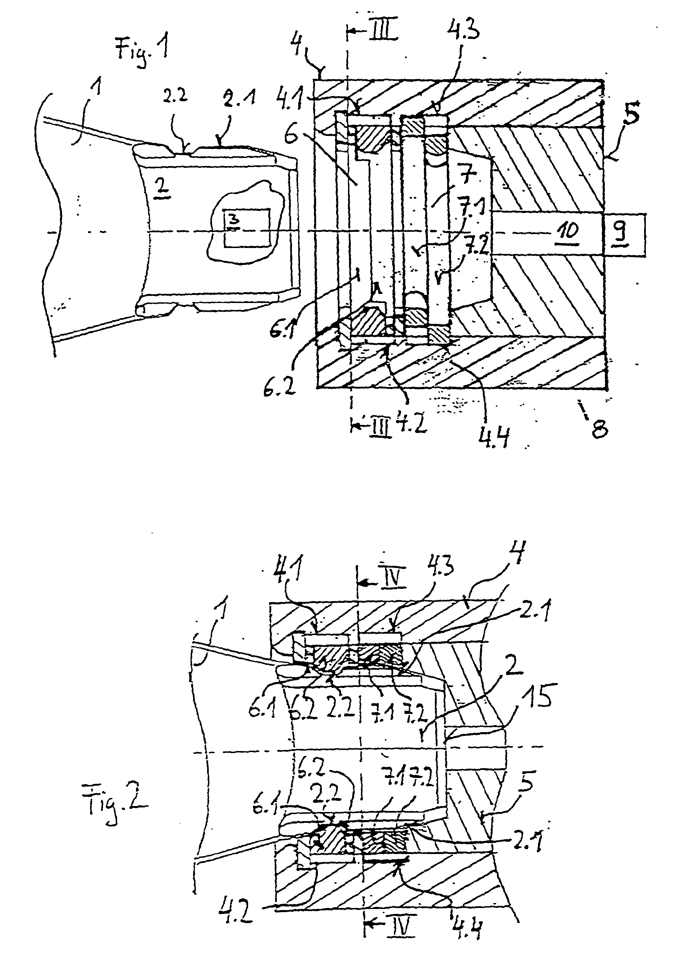

Wie aus der Fig. 1 ersichtlich ist umfaßt das Zündschloßsystem einen elektronischen Zündschlüssel 1 mit einer ersten Kommunikationseinrichtung 3, welche Einrichtungen zum Ver- bzw. Entschlüsseln von codierten Betriebssignalen umfaßt, wobei ein Teil des elektronischen Zündschlüssels 1 als Stecker 2 mit angeformten Entriegelungsnasen 2.1 und mit Rastkerben 2.2 ausgebildet und aus einem gegen Beschädigungen weniger widerstandsfähigen Material hergestellt ist, sowie ein elektronisches Zündschloß 8 mit einem Zündschloßgehäuse 4, einer Schlüsselaufnahme 5, welche als Steckdose in Form einer Drehhülse ausgeführt ist, einer zweiten Kommunikationseinrichtung 9 mit Einrichtungen zum Ver- bzw. Entschlüsseln von codieren Betriebssignalen, einer Abzugssicherung 6, welche ein Rastschieberpaar mit einem ersten Rahmen 6.1, einem zweiten Rahmen 6.2 und einem ersten Federpaar 11.1, 11.2 umfaßt, wobei die beiden Rahmen 6.1, 6.2 aus einem gegen Beschädigungen widerstandsfähigeren Material hergestellt sind, einer Drehsperre 7, welche ein Sperrschieberpaar mit einem dritten Rahmen 7.1, einem vierten Rahmen 7.2 und einem zweiten Federpaar 12.1, 12.2 umfaßt, wobei die beiden Rahmen 7.1, 7.2 aus einem gegen Beschädigungen widerstandsfähigeren Material hergestellt sind. Die Drehsperre 7 und die Abzugssicherung 6 sind jeweils in einem Führungsschacht 13, 14 in der Schlüsselaufnahme 5 beweglich gelagert.

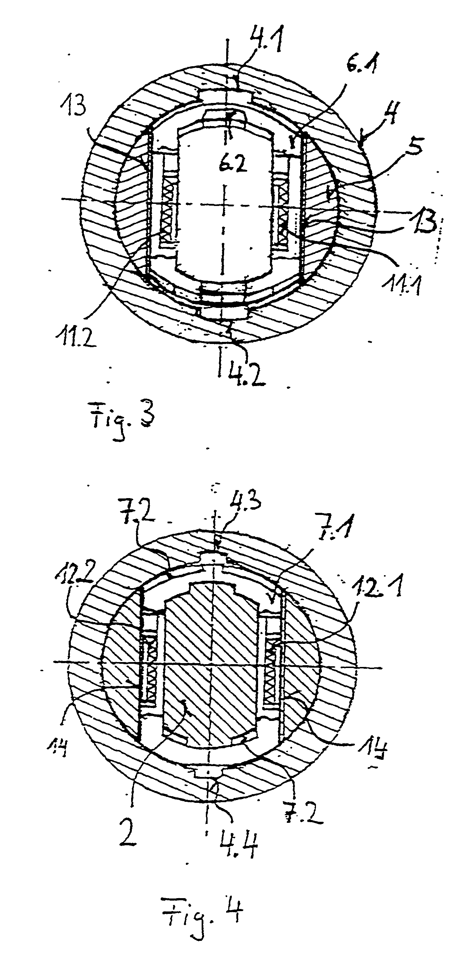

Wie weiter aus der Fig. 1 ersichtlich ist, ist der elektronische Zündschlüssel 1 vor dem elektronischen Zündschloß 8 positioniert und die Abzugssicherung 6 und die Drehsperre 7 befinden sich in ihren Ausgangslagen, d. h. die Außenkonturen der beiden Rahmen 6.1 und 6.2 der Abzugssicherung 6 ragen nicht über die als Drehhülse ausgeführte Schlüsselaufnahme 5 hinaus (siehe hierzu auch Fig. 3) und die beiden Rahmen 7.1 und 7.2 der Drehsperre 7 sind diametral gegeneinander verschoben und jeweils ein als Verriegelungsnocken ausgebildetes Ende der beiden Rahmen 7.1, 7.2, ragen über den Umfang der Drehhülse hinaus und greifen in Ausnehmungen 4.3, 4.4 im Gehäuse 4 des Zündschlosses 8 ein, wodurch eine Drehbewegung der Schlüsselaufnahme 5 verhindert wird. Der Verriegelungsnocken des dritten Rahmens 7.1 greift dabei in die dritte Ausnehmung 4.3 und der Verriegelungsnocken des vierten Rahmens 7.2 greift in die vierte Ausnehmung 4.4 im Gehäuse 4 des elektronischen Zündschlosses 8 ein. Bei der Einführbewegung des elektronischen Zündschlüssels 1 in das elektronische Zündschloß 8 bzw. in die Schlüsselaufnahme 5 werden die beiden Rahmen 6.1 und 6.2 der Abzugssicherung 6 durch die Entriegelungsnasen 2.1 des Steckers 2 des elektronischen Zündschlüssels 1 gegen die Federkraft des Federpaars 11.1, 11.2 diametral gegeneinander aus der als Drehhülse ausgeführten Schlüsselaufnahme 5 verschoben und jeweils ein als Verriegelungsnocken ausgebildetes Ende der beiden Rahmen 6.1, 6.2, ragen über den Umfang der Drehhülse hinaus und greifen in Ausnehmungen 4.1, 4.2 im Gehäuse 4 des Zündschlosses 8 ein, wobei der Verriegelungsnocken des ersten Rahmens 6.1 in die erste Ausnehmung 4.1 und der Verriegelungsnocken des zweiten Rahmens 6.2 in die zweite Ausnehmung 4.2 eingreift.

Fig. 2 zeigt die wesentlichen mechanischen Teile des elektronischen Zündschloßsystems mit einem vorschriftsmäßig in die Schlüsselaufnahme 5 eingeführten elektronischen Zündschlüssel 1, d. h. der als Stecker 2 ausgebildete Teil des elektronischen Zündschlüssels 1 ist vollständig bis zum Anschlag 15 in die Schlüsselaufnahme 5 eingeführt. Wie aus der Fig. 2 ersichtlich ist, werden die beiden Rahmen 6.1, 6.2 der Abzugssicherung 6 durch den vorschriftsmäßig eingeführten elektronischen Zündschlüssel 1 mittels der Federkraft des Federpaars 11.1, 11.2 aus den Ausnehmungen 4.3, 4.4 im Gehäuse 4 des elektronischen Zündschlosses 8 zurück in die als Drehhülse ausgeführte Schlüsselaufnahme 5 gedrückt, wobei die Innenseiten der beiden Rahmen in die Rastkerben 2.2 des Steckers 2 des elektronischen Zündschlüssels 1 einrasten. Die Abzugssicherung nimmt somit wieder ihre Ausgangslage gemäß der Darstellung in Fig. 1 ein, wobei die Ausgangslage mit dem in die Schlüsselaufnahme 5 eingeführten elektronischen Zündschlüssel 1 einer Sicherungsstellung entspricht. Wird die Schlüsselaufnahme 5 mit dem eingeführten elektronischen Zündschlüssel 1 nun aus ihrer Ausgangsstellung in eine Gebrauchsstellung bewegt, so kann der Zündschlüssel 1 nicht aus der Schlüsselaufnahme 5 herausgezogen werden, da die entsprechenden Ausnehmungen 4.1, 4.2 im Gehäuse 4 des Zündschlosses 8 nur in der Ausgangsstellung der Schlüsselaufnahme 5 mit Verriegelungsnocken der beiden Rahmen 6.1, 6.2 der Abzugssicherung 6 korrespondieren. Die beiden Rahmen 7.1 und 7.2 der Drehsperre 7 werden durch die Entriegelungsnasen 2.1 des Steckers 2 des elektronischen Zündschlüssels 1 gegen die Federkraft des Federpaars 12.1 und 12.2 diametral gegeneinander verschoben und in die als Drehhülse ausgeführte Schlüsselaufnahme 5 gedrückt, wobei die Enden der beiden Rahmen 7.1, 7.2 aus den Ausnehmungen 4.3, 4.4 gezogen werden. Somit wird durch den vorschriftsmäßig eingeführten elektronischen Schlüssel die beiden Rahmen 7.1, 7.2 in einer Freigabestellung gehalten (siehe hierzu auch Fig. 4).

Nach dem vorschriftsmäßigen Einführen des elektronischen Zündschlüssels wird eine Datenübertragung zur Identifizierung des elektronischen Zündschlüssels 1 gestartet. Zu diesem Zweck tauschen die erste Kommunikationseinrichtung 3 im elektronischen Zündschlüssel 1 und die zweite Kommunikationseinrichtung 9 im elektronischen Zündschloß 8 über eine Übertragungsstrecke 10, welche beispielsweise als Lichtleiter ausgeführt ist, codierte Betriebssignale aus.

## Patentansprüche

1. Zündschlosssystem für Kraftfahrzeuge, mit einem elektronischen Zündschlüssel und einem elektronischen Zündschloss mit einer Schlüsselaufnahme, wobei der elektronische Zündschlüssel zum Austausch von codierten Betriebssignalen in die Schlüsselaufnahme eingeführt wird, wobei die Schlüsselaufnahme mit dem eingeführten elektronischen Zündschlüssel aus einer Ausgangsstellung in mindestens eine Gebrauchsstellung bewegbar ist, wobei in der Schlüsselaufnahme mechanische Sperrmittel vorgesehen sind, die den elektronischen Zündschlüssel gegen ein Abziehen aus der Schlüsselaufnahme in der mindestens einen Gebrauchsstellung sperren,
**dadurch gekennzeichnet, dass**
- die mechanischen Sperrmittel (6; 7) mit dem elektronischen Zündschlüssel (1) so zusammenwirken, dass der elektronische Zündschlüssel (1) beim gewaltsamen Überwinden von Sperrwirkungen der mechanischen Sperrmittel (6; 7) und/oder bei einem gewaltsamen Drehen aus einer gesperrten Ausgangstellung mit einem nicht vorschriftsmäßig das heißt nicht vollständig im die Schlüsselaufnahme eingeführten elektronischen Zündschlüssel (1) derart irreversibel beschädigt wird, dass am Schlüsselgehäuse (2; 2.1) des elektronischen Zündschlüssels (1) deutlich erkennbare Knatzspuren hervorgerufen werden wodurch eine solche Manipulation sicher erkannt wird und dass
- die irreversible Beschädigung durch eine Materialabstimmung zwischen den mechanischen Sperrmitteln (6; 7) und dem elektronischen Zündschlüssel (1) erreicht wird, wobei die mechanischen Sperrmittel (6; 7) aus einem gegen Beschädigungen widerstandsfähigeren Material hergestellt wird und ein Gehäuseteil (2) des elektronischen Zündschlüssels (1) aus einem gegen Beschädigungen weniger widerstandsfähigen Material hergestellt wird.

2. Zündschlosssystem nach Anspruch 1,
**dadurch gekennzeichnet, dass**
die irreversible Beschädigung des elektronischen Zündschlüssels (1) deutlich erkennbare Bruchstellen in und/oder an Gehäuseteilen (2; 2.1) des elektronischen Zündschlüssels sind.

3. Zündschlosssystem nach Anspruch 1 oder 2,
**dadurch gekennzeichnet, dass**
Sollbruchstellen an vorgegebenen Gehäusestellen (2) des elektronischen Zündschlüssels vorgesehen sind.

4. Zündschlosssystem nach Anspruch 1, 2 oder 3,
**dadurch gekennzeichnet, dass**
die mechanischen Sperrmittel (6; 7) als Abzugssicherung (6) und/oder als Drehsperre (7) ausgebildet sind.

5. Zündschlosssystem nach Anspruch 4,
**dadurch gekennzeichnet, dass**
die Abzugssicherung (6) als Rastschieberpaar mit einem ersten Rahmen (6.1), einem zweiten Rahmen (6.2) und einem ersten Federpaar (11.1; 11.2) ausgebildet ist und in einem ersten Führungsschacht (13) in einer als Drehhülse ausgeführten Schlüsselaufnahme (5) beweglich gelagert ist, wobei die Abzugssicherung (6) durch ein Zusammenwirken mit einer korrespondierenden Kontur (2.1, 2.2) des Zündschlüssels (1) in eine Sicherungsstellung bringbar (1) ist.

6. Zündschlosssystem nach Anspruch 5,
**dadurch gekennzeichnet**e, dass
als korrespondierende Kontur Entriegelungsnasen (2.1) und Rastkerben (2.2) am Zündschlüssel vorgesehen sind, wobei die Entriegelungsnasen (2.1) beim Einführen des elektronischen Zündschlüssels (1) in die Schlüsselaufnahme (5) die beiden Rahmen (6.1; 6.2) gegen die Kraft des ersten Federpaars (11.1, 11.2) diametral gegeneinander verschieben und die Verriegelungsnocken der beiden Rahmen (6.1, 6.2) in Ausnehmungen (4.1, 4.2) im Gehäuse (4) des elektronischen Zündschlosses (8) drücken, wobei die beiden Rahmen (6.1, 6.2) bei einem vorschriftsmäßig eingeführten Zündschlüssel (1) durch die Federkraft des ersten Federpaars (11.1; 11.2) in die hinter den Entriegelungsnasen (2.1) angeordneten Rastkerben (2.2) gedrückt werden und somit Verriegelungsnocken der beiden Rahmen (6.1, 6.2) wieder aus den Ausnehmungen (4.1, 4.2) gezogen werden und die beiden Rahmen (6.1, 6.2) die Sicherungsstellung einnehmen, wobei die Abzugssicherung (6) nur in der Ausgangsstellung der Schlüsselaufnahme (5) aus der Sicherungsstellung in eine Entsicherungsstellung bewegbar ist.

7. Zündschlosssystem nach Anspruch 4,
**dadurch gekennzeichnet, dass**
die Drehsperre (7) als Sperrschieberpaar mit einem dritten Rahmen (7.1), einem vierten Rahmen (7.2) und einem zweiten Federpaar (12.1; 12.2) ausgebildet ist und in einem zweiten Führungsschacht (14) in der als Drehhülse ausgeführten Schlüsselaufnahme (5) beweglich gelagert ist, wobei die Drehsperre (7) durch ein Zusammenwirken mit einer korrespondierenden Kontur (2.1) des Zündschlüssels (1) entriegelbar ist.

8. Zündschlosssystem nach Anspruch 7,
**dadurch gekennzeichnet, dass**
in der Ausgangsstellung der Schlüsselaufnahme (5) ohne eingeführten elektronischen Zündschlüssel (1) die beiden Rahmen (7.1, 7.2) diametral gegeneinander verschoben sind und die Verriegelungsnocken der beiden Rahmen (7.1, 7.2) aus der Schlüsselaufnahme (5) herausragen und in Ausnehmungen (4.3, 4.4) im Gehäuse (4) des elektronischen Zündschlosses (8) eingreifen, wodurch die Schlüsselaufnahme (5) gegen eine Be-wegung aus der Ausgangsstellung in wenigstens eine Gebrauchsstellung gesperrt wird, und dass Entriegelungsnasen (2.1) an den elektronischen Zündschlüssel (1) angeformt sind, welche bei einem vorschriftsmäßig eingeführten elektronischen Zündschlüssel (1) die beiden Rahmen (7.1, 7.2) gegen die Federkraft des zweiten Federpaars (12.1; 12.2) diametral gegeneinander in die Schlüsselaufnahme (5) verschieben und so die Enden der beiden Rahmen (7.1, 7.2) aus den Ausnehmungen (4.3, 4.4) im Gehäuse (4) des elektronischen Zündschlosses (8) gezogen werden.

## Claims

1. Ignition lock system for motor vehicles, with an electronic ignition key and with an electronic ignition lock having a key receptacle, the electronic ignition key being inserted into the key receptacle for the exchange of coded operating signals, the key receptacle, together with the inserted electronic ignition key, being capable of being moved out of an initial position into at least one position of use, mechanical blocking means being provided in the key receptacle, which block the electronic ignition key against being withdrawn from the key receptacle in the at least one position of use, **characterized in that**
- the mechanical blocking means (6; 7) cooperate with the electronic ignition key (1) in such a way that the electronic ignition key (1) when blocking actions of the mechanical blocking means (6; 7) are forcibly overcome and/or if an electronic ignition key not inserted as instructed, i.e. not fully inserted into the key receptacle, is forcibly turned out of a blocked initial position, is irreversibly damaged such that clearly detectable traces of scratching are caused to the key housing (2; 2.1) of the electronic ignition key (1) with the result that such a manipulation can be reliably detected and **in that**
- the irreversible damage is achieved by coordination of material between the mechanical blocking means (6; 7) and the electronic ignition key (1), the mechanical blocking means (6; 7) being produced from a material more resistant to damage and a housing part (2) of the electronic ignition key (1) being produced from a material less resistant to damage.

2. Ignition lock system according to Claim 1, **characterized in that** the irreversible damage of the electronic ignition key (1) is clearly detectable break points in and/or on housing parts (2; 2.1) of the electronic ignition key (1).

3. Ignition lock system according to Claim 1 or 2, **characterized in that** predetermined breaking points are provided at predetermined housing points (2) of the electronic ignition key.

4. Ignition lock system according to Claim 1, 2 or 3, **characterized in that** the mechanical blocking means (6; 7) are designed as withdrawal protection means (6) and/or as turn-blocking means (7).

5. Ignition lock system according to Claim 4, **characterized in that** the withdrawal protection means (6) is designed as a pair of catch slides having a first frame (6.1), a second frame (6.2) and a first pair of springs (11.1; 11.2) and is movably mounted in a first guide well (13) in a key receptacle (5) designed as a rotary sleeve, the withdrawal protection means (6) being capable of being brought into a securing position by cooperation with a matching contour (2.1, 2.2) of the ignition key (1).

6. Ignition lock system according to Claim 5, **characterized in that** unlocking noses (2.1) and catch notches (2.2) on the ignition key are provided as a matching contour, when the electronic ignition key (1) is inserted into the key receptacle (5) the unlocking noses (2.1) displacing the two frames (6.1; 6.2) diametrically relative to one another counter to the force of the first pair of springs (11.1, 11.2) and pressing the interlocking bosses of the two frames (6.1, 6.2) into recesses (4.1, 4.2) in the housing (4) of the electronic ignition lock (8), when the ignition key (1) is inserted as instructed the two frames (6.1, 6.2) being pressed by the spring force of the first pair of springs (11.1; 11.2) into the catch notches (2.2) arranged behind the unlocking noses (2.1), interlocking bosses of the two frames (6.1, 6.2) thus being drawn out of the recesses (4.1, 4.2) again and the two frames (6.1, 6.2) assuming the securing position, the withdrawal protection means (6) being capable of being moved out of the securing position into a desecuring position solely when the key receptacle (5) is in the initial position.

7. Ignition lock system according to Claim 4, **characterized in that** the turn-blocking means (7) is designed as a pair of blocking slides having a third frame (7.1), a fourth frame (7.2) and a second pair of springs (12.1; 12.2) and is movably mounted in a second guide well (14) in the key receptacle (5) designed as a rotary sleeve, the turn-blocking means (7) being capable of being unlocked by cooperation with a matching contour (2.1) of the ignition key (1).

8. Ignition lock system according to Claim 7, **characterized in that**, when the key receptacle (5) is in the initial position, without the electronic ignition key (1) being inserted, the two frames (7.1, 7.2) are displaced diametrically relative to one another and the interlocking bosses of the two frames (7.1, 7.2) project out of the key receptacle (5) and engage in recesses (4.3, 4.4) in the housing (4) of the electronic ignition lock (8), with the result that the key receptacle (5) is blocked against movement out of the initial position into at least one position of use, and **in that** unlocking noses (2.1) are integrally formed on the electronic ignition key (1), and, when an electronic ignition key (1) is inserted as instructed, the said unlocking noses displace the two frames (7.1, 7.2) diametrically relative to one another into the key receptacle (5) counter to the spring force of the second pair of springs (12.1; 12.2) and the ends of the two frames (7.1, 7.2) are thus drawn out of the recesses (4.3, 4.4) in the housing (4) of the electronic ignition lock (8).

## Revendications

1. Système de serrure de contact pour véhicules automobiles, avec une clé de contact électronique et une serrure de contact électronique avec un logement de clé, la serrure de contact électronique étant introduite dans le logement de clé pour l'échange de signaux de fonctionnement codés, le logement de clé avec la clé de contact électronique introduite étant déplaçable entre une position de départ et au moins une position d'utilisation, des moyens de verrouillage mécaniques étant prévus dans le logement de clé qui verrouillent la clé de contact électronique pour empêcher une extraction hors du logement de clé dans ladite au moins une position d'utilisation, **caractérisé en ce que**
- les moyens de verrouillage mécaniques (6 ; 7) coopèrent avec la serrure de contact électronique (1) de telle manière que, en cas de neutralisation par la force des effets de verrouillage des moyens de verrouillage mécaniques (6 ; 7) et/ou en cas de rotation par la force à partir d'une position de départ verrouillée avec une clé de contact électronique (1) introduite de manière non réglementaire, c'est-à-dire pas complètement dans le logement de clé, la serrure de contact électronique (1) est endommagée de manière irréversible de sorte que cela entraîne des dommages, des traces d'éraflures, nettement visibles dans le logement de clé (2 ; 2.1) de la clé de contact électronique (1), ce qui fait qu'une telle manipulation est détectée de manière sure et **en ce que**
- le dommage irréversible est obtenu par une correspondance de matière entre les moyens de verrouillage mécaniques (6 ; 7) et la serrure de contact électronique (1), les moyens de verrouillage mécaniques (6 ; 7) étant fabriqués en une matière résistant mieux aux dommages et une partie de boîtier (2) de la serrure de contact électronique (1) étant fabriquée en une matière résistant moins bien aux dommages.

2. Système de serrure de contact selon la revendication 1, **caractérisé en ce que** le dommage irréversible de la serrure de contact électronique (1) est constitué par des points de rupture nettement visibles dans et/ou sur des parties de boîtier (2 ; 2.1) de la serrure de contact électronique.

3. Système de serrure de contact selon la revendication 1 ou 2, **caractérisé en ce qu'**il est prévu des points de rupture dans des parties de boîtier prédéterminées (2) de la serrure de contact électronique.

4. Système de serrure de contact selon la revendication 1, 2 ou 3, **caractérisé en ce que** les moyens de verrouillage mécaniques (6 ; 7) sont configurés sous forme d'un dispositif de sécurité anti-extraction (6) et/ou d'un dispositif de blocage anti-rotation (7).

5. Système de serrure de contact selon la revendication 4, **caractérisé en ce que** le dispositif de sécurité anti-extraction (6) est configuré sous forme d'une paire de coulisseaux d'arrêt avec un premier cadre (6.1), un deuxième cadre (6.2) et une première paire de ressorts (11.1 ; 11.2) et **en ce qu'**il est logé de manière mobile dans un premier compartiment de guidage (13) dans un logement de clé (5) réalisé sous forme de canon rotatif, le dispositif de sécurité anti-extraction (6) pouvant être amené dans une position de sécurité (1) par la coopération avec un profil correspondant (2.1 ; 2.2) de la clé de contact (1).

6. Système de serrure de contact selon la revendication 5, **caractérisé en ce qu'**il est prévu comme profil correspondant des taquets de déverrouillage (2.1) et des crans d'arrêt (2.2) sur la clé de contact, les taquets de déverrouillage (2.1) déplaçant les deux cadres (6.1 ; 6.2) diamétralement l'un par rapport à l'autre contre la force de la première paire de ressorts (11.1, 11.2) lors de l'introduction de la clé de contact électronique (1) dans le logement de clé (5) et poussant les ergots de verrouillage des deux cadres (6.1, 6.2) dans des logements (4.1, 4.2) dans le boîtier (4) de la serrure de contact électronique (8), les deux cadres (6.1, 6.2) étant poussés dans les crans d'arrêt (2.2) disposés derrière les taquets de déverrouillage (2.1) par la force de ressort de la première paire de ressorts (11.1 ; 11.2) lors d'une introduction réglementaire de la clé de contact (1) et les ergots de verrouillage des deux cadres (6.1, 6.2) étant ainsi de nouveau extraits des logements (4.1, 4.2) et les deux cadres (6.1, 6.2) prenant la position de sécurité, le dispositif de sécurité anti-extraction (6) pouvant être déplacé entre la position de sécurité et une position de déblocage uniquement dans la position de départ du logement de clé (5).

7. Système de serrure de contact selon la revendication 4, **caractérisé en ce que** le dispositif de blocage anti-rotation (7) est configuré sous forme d'une parie de coulisseaux de verrouillage avec un troisième cadre (7.1), un quatrième cadre (7.2) et une deuxième paire de ressorts (12.1 ; 12.2) et **en ce qu'**il est logé de manière mobile dans un deuxième compartiment de guidage (14) dans le logement de clé (5) réalisé sous forme de canon rotatif, le dispositif de sécurité anti-rotation (7) pouvant être déverrouillé par la coopération avec un profil correspondant (2.1) de la clé de contact (1).

8. Système de serrure de contact selon la revendication 7, **caractérisé en ce que**, dans la position de départ du logement de clé (5) sans que la clé de contact électronique (1) soit introduite, les deux cadres (7.1, 7.2) sont déplacés diamétralement l'un par rapport à l'autre et les ergots de verrouillage des deux cadres (7.1, 7.2) font saillie hors du logement de clé (5) et viennent en prise dans des creux (4.3, 4.4) prévus dans le boîtier (4) de la serrure de contact électronique (8), de sorte que le logement de clé (5) est verrouillé contre un déplacement hors de la position de départ dans au moins une position d'utilisation, et **en ce que** des taquets de déverrouillage (2.1) sont moulés sur la clé de contact électronique (1), lesquels taquets déplacent les deux cadres (7.1, 7.2) diamétralement l'un par rapport à l'autre dans le logement de clé (5) contre la force de ressort de la deuxième paire de ressorts (12.1, 12.2) lors d'une introduction réglementaire de la clé de contact électronique (1), de sorte que les extrémités des deux cadres (7.1, 7.2) sont extraites hors des creux (4.3, 4.4) dans le boîtier (4) de la serrure de contact électronique (8).
